# FASCICULE DE BREVET EUROPEEN

(11) **EP 3 227 224 B1**
(45) Date de publication et mention de la délivrance du brevet: **01.05.2019**
(21) Numéro de dépôt: 15800839.1
(22) Date de dépôt: 25.11.2015
(51) Int. Cl.: B66F 11/04, B66F 17/00

(54) **MACHINE DE TRAVAUX COMPORTANT DES MOYENS FIABILISÉS DE NEUTRALISATION D'UN DISPOSITIF DE SÉCURITÉ**
ARBEITSMASCHINE MIT ZUVERLÄSSIGERER VORRICHTUNG ZUR NEUTRALISIERUNG EINER SICHERHEITSVORRICHTUNG
WORKS MACHINE COMPRISING MORE RELIABLE MEANS OF NEUTRALIZING A SAFETY DEVICE

(30) Priorité: 03.12.2014 FR 1461873
(43) Date de publication de la demande: 11.10.2017
(73) Titulaire: Haulotte Group, 42152 L'Horme (FR)
(72) Inventeur: HUBER, Emmanuel, F-69600 Oullins (FR); GODINEAU, Gaëtan, F-69530 Orlienas (FR)
(74) Mandataire: Lavoix
(86) Numéro de dépôt international: PCT/EP2015/077651
(87) Numéro de publication internationale: WO 2016/087282

(56) Documents cités:
- WO-A1-00/19052
- WO-A1-2011/109897
- WO-A2-2012/109444
- DE-A1- 10 138 898

## Description

La présente invention concerne une machine de travaux comportant des moyens fiabilisés de neutralisation d'un dispositif de sécurité.

Plus particulièrement, l'invention concerne un dispositif de levage, mais elle pourrait être étendue à toute machine de travaux susceptible de passer dans un état d'arrêt de sécurité.

On connaît déjà, dans l'état de la technique, une machine de travaux, notamment un dispositif de levage, comportant un dispositif de sécurité, propres à passer la machine depuis un état de fonctionnement normal jusqu'à un état d'arrêt de sécurité, et un dispositif de neutralisation de cet état d'arrêt de sécurité, comprenant un élément d'activation propre à passer la machine depuis l'état d'arrêt de sécurité jusqu'à un état de fonctionnement forcé, et des moyens de commande auxiliaires de la machine en état de fonctionnement forcé. Une autre machine de travaux est connue de la publication internationale WO 2012/109444 A2.

Dans le cas d'un dispositif de levage comportant une plateforme de levage, il peut arriver qu'un utilisateur présent sur la plateforme soit victime d'un malaise ou d'un accident, et soit alors dans l'incapacité de piloter lui-même le dispositif de levage pour retourner au sol. Dans cette situation, il est fréquent qu'un dispositif de sécurité de la machine, tel qu'un dispositif d'arrêt d'urgence ou un limiteur de charge, soit actionné, pour passer d'un état de fonctionnement normal jusqu'à un état d'arrêt de sécurité.

Dans le cas d'un tel arrêt de sécurité, il est nécessaire de pouvoir secourir l'utilisateur se trouvant dans la plateforme, en ramenant la plateforme au sol ou à portée du sol.

A cet effet, le dispositif de neutralisation est généralement agencé pour être accessible depuis le sol et permet de piloter la plateforme, en vue de l'amener à portée pour secourir l'utilisateur malgré l'état d'arrêt de sécurité.

Conformément à la norme EN280-2013, il est exigé de prévoir des dispositifs pour la protection contre les abus d'utilisation du dispositif de neutralisation et pour donner une indication visible de son utilisation.

Dans ce but, on prévoit dans l'état de la technique que l'élément d'activation soit formé par un interrupteur dédié et scellé. Toutefois, un tel interrupteur ne donne pas entière satisfaction.

En effet, l'absence de scellé ne signifie pas nécessairement que le dispositif de neutralisation a été activé. A l'inverse, il est aisé de remettre un scellé après activation du dispositif de neutralisation, si bien que la présence d'un scellé ne signifie pas nécessairement que le dispositif de neutralisation n'a pas été activé.

Ainsi, l'indication visible de l'utilisation du dispositif de neutralisation n'est pas entièrement fiable.

L'invention a notamment pour but de remédier à cet inconvénient, en proposant une machine de travaux dont le suivi de l'utilisation du dispositif de neutralisation est fiabilisé.

A cet effet, l'invention a notamment pour objet une machine de travaux à nacelle élévatrice, comportant :
- des dispositifs de sécurité, propres à passer la machine depuis un état de fonctionnement normal jusqu'à un état d'arrêt de sécurité,
- une plateforme équipée de moyens de commande principaux, propres à commander la machine en état de fonctionnement normal,
- des moyens de neutralisation de l'état d'arrêt de sécurité, comprenant un élément d'activation, propre à passer la machine depuis l'état d'arrêt de sécurité jusqu'à un état de fonctionnement forcé lorsqu'il est actionné, et
- des moyens de commande auxiliaires de la machine, manipulables depuis le sol, propres à commander la machine en état de fonctionnement forcé lorsqu'ils sont actionnés,
caractérisée en ce que les moyens de neutralisation comportent un dispositif informatique comprenant :
- l'élément d'activation,
- un dispositif de mémoire, et
- des moyens d'inscription, dans le dispositif de mémoire, d'une information selon laquelle l'élément d'activation a été actionné.

Les moyens de neutralisation selon l'invention, également appelés moyens d'outrepassement, permettent une inscription, dans le dispositif de mémoire, d'une information lorsque l'élément d'activation a été actionné. Cette information peut être binaire (indiquant uniquement si l'élément d'activation a été actionné ou non) ou comporter d'autres indications telles que la date et l'heure de l'activation.

Cette information ne peut pas être inscrite sans actionnement de l'élément d'activation, et ne peut pas être supprimé aisément. En d'autres termes, la fiabilité des moyens de neutralisation selon l'invention est augmentée, en résolvant les problèmes posés par ceux de l'état de la technique.

Avantageusement, les moyens d'inscription sont configurés pour inscrire l'information dans le dispositif de mémoire uniquement lorsque l'élément d'activation et les moyens de commande auxiliaires ont tous deux été actionnés.

Ainsi, l'information est inscrite dans le dispositif de mémoire uniquement lorsqu'une commande de la machine a effectivement été effectuée grâce aux moyens de neutralisation. Une telle distinction n'est pas possible dans l'état de la technique, où la seule information disponible est la présence du scellé ou non, ce qui ne permet pas de présupposer de l'utilisation effective des moyens de neutralisation.

Une machine de travaux selon l'invention peut comporter en outre l'une ou plusieurs des caractéristiques suivantes, prises seules ou selon toutes combinaisons techniquement envisageables.
- Le dispositif informatique comporte un écran d'affichage et une interface homme/machine.
- Le dispositif informatique comporte des moyens d'affichage d'une indication selon laquelle l'élément d'activation et/ou les moyens de commande auxiliaires ont été actionnés.
- Les moyens de neutralisation sont alimentés depuis une source d'alimentation via une connexion propre à être maintenue même en état d'arrêt de sécurité de la machine, et notamment lorsque l'état d'arrêt de sécurité est causé par un interrupteur d'arrêt d'urgence.
- Les dispositifs de sécurité comportent : un limiteur de charge, propre à passer la machine depuis l'état de fonctionnement normal jusqu'à l'état d'arrêt de sécurité lorsque la masse de la charge est supérieure à une valeur prédéterminée, et/ou un dispositif de sécurité d'utilisateur, propre à passer la machine depuis l'état de fonctionnement normal jusqu'à l'état d'arrêt de sécurité lorsque une perte de conscience de l'utilisateur est détectée, et/ou au moins un interrupteur d'arrêt d'urgence, propre à passer la machine depuis l'état de fonctionnement normal jusqu'à l'état d'arrêt de sécurité lorsqu'il est actionné.
- L'information inscrite dans le dispositif de mémoire indique : si l'état d'arrêt de sécurité a été causé par le limiteur de charge, le dispositif de sécurité d'utilisateur ou l'interrupteur, et/ou à quelle date et/ou heure l'élément d'activation et/ou les moyens de commande auxiliaires ont été actionnés, et/ou quels mouvements ont été effectués par les moyens de commande auxiliaires.

L'invention concerne également un procédé de neutralisation d'un état d'arrêt de sécurité d'une machine de travaux telle que définie précédemment, caractérisé en ce qu'il comporte :
- une étape d'actionnement de l'élément d'activation, et
- une étape d'inscription, dans le dispositif de mémoire, d'une information selon laquelle l'élément d'activation a été actionné.

Avantageusement, le procédé de neutralisation comporte, suite à l'étape d'actionnement de l'élément d'activation, une étape d'activation des moyens de commande auxiliaires, et dans lequel l'étape d'inscription fait suite à l'étape d'activation des moyens de commande auxiliaires, l'information étant inscrite lorsque l'élément d'activation et les moyens de commande auxiliaires ont tous deux été actionnés.

Avantageusement, le procédé de neutralisation comporte, ultérieurement à l'étape d'inscription, une étape de réinitialisation des moyens de neutralisation, notamment au moyen d'un écran d'affichage et d'une interface homme/machine comportant des boutons permettant d'entrer un code de réinitialisation.

L'invention sera mieux comprise à la lecture de la description qui va suivre, donnée uniquement à titre d'exemple et faite en se référant aux figures annexées parmi lesquelles :
- la figure 1 représente schématiquement, de profil, une machine de travaux selon un exemple de mode de réalisation de l'invention ;
- la figure 2 représente un panneau d'interface équipant des moyens de neutralisation d'un état d'arrêt de sécurité de la machine de travaux de la figure 1 ;
- la figure 3 représente schématiquement les étapes d'un procédé de neutralisation d'un état d'arrêt de sécurité de la machine de travaux de la figure 1.

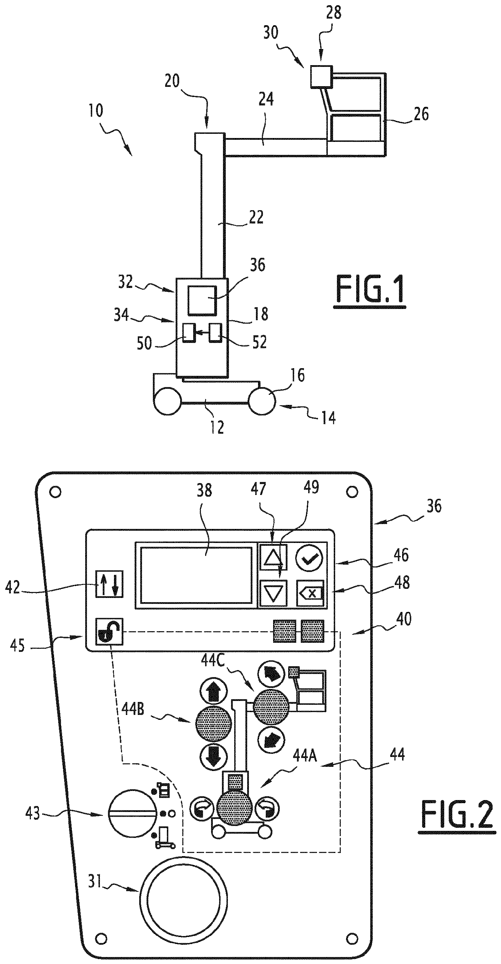

On a représenté, sur la figure 1, une machine de travaux 10 selon un exemple de mode de réalisation de l'invention. La machine de travaux 10 est un dispositif de levage d'une personne, également appelée machine à nacelle élévatrice.

Un tel dispositif de levage 10 comporte, de manière classique, un châssis 12 monté sur des moyens de déplacement 14, comprenant notamment des roues 16. La machine de travaux 10 comporte par ailleurs une tourelle 18, montée mobile en rotation autour d'un axe vertical par rapport au châssis 12.

La tourelle 18 porte un bras 20, par exemple un bras 20 en deux parties, comportant une première partie de bras 22 verticale, s'élevant depuis la tourelle 18 parallèlement audit axe vertical, et une seconde partie de bras 24, reliée de manière mobile sur la première partie de bras 22, à la fois en translation le long d'une direction verticale parallèle audit axe vertical, et en rotation autour d'un axe perpendiculaire à la direction verticale. La première partie de bras 22 est par exemple formée par un bras vertical télescopique, déployable dans la direction de l'axe vertical entre une position escamotée dans la tourelle 18, et une position déployée.

La seconde partie de bras 24 porte une plateforme 26, reliée à cette seconde partie de bras 24 de manière articulée, de sorte que cette plateforme 26 reste horizontale quelque soit l'inclinaison de la seconde partie de bras 24 par rapport à la première partie de bras 22.

La plateforme 26 comporte des moyens de commande principaux 28, actionnables par un utilisateur présent dans cette plateforme 26, permettant de commander diverses fonctions de la machine 10, notamment les mouvements des moyens de déplacement 14, de la tourelle 18 et du bras 20.

De manière classique, la machine de travaux 10 comporte des dispositifs de sécurité 30.

Les dispositifs de sécurité 30 comportent par exemple un limiteur de charge de type classique, propre à passer la machine 10 depuis un état de fonctionnement normal jusqu'à un état d'arrêt de sécurité lorsque la masse de la charge portée par la plateforme 26 est supérieure à une valeur prédéterminée.

En variante ou en complément, les dispositifs de sécurité 30 comportent un dispositif de sécurité d'utilisateur, propre à passer la machine 10 depuis l'état de fonctionnement normal jusqu'à l'état d'arrêt de sécurité lorsqu'une perte de conscience de l'utilisateur ou un choc contre l'utilisateur présent dans la plateforme 26 est détecté.

En variante ou en complément, les dispositifs de sécurité 30 comportent un premier interrupteur d'arrêt d'urgence, par exemple agencé parmi les moyens de commande principaux 28, actionnable par l'utilisateur présent dans la plateforme 26 pour passer la machine 10 depuis l'état de fonctionnement normal jusqu'à l'état d'arrêt de sécurité.

En variante ou en complément, les dispositifs de sécurité 30 comportent un second interrupteur d'arrêt d'urgence 31, par exemple agencé sur la tourelle 18, actionnable par une personne au sol pour passer la machine 10 depuis l'état de fonctionnement normal jusqu'à l'état d'arrêt de sécurité.

Tous ces dispositifs de sécurité 30 sont classiques et ne seront donc pas décrits plus en détail.

Lorsque la machine 10 est dans un état d'arrêt de sécurité alors qu'un utilisateur se trouve dans la plateforme 26, et plus particulièrement lorsque cet utilisateur a perdu connaissance, il est nécessaire de ramener la plateforme 26 à portée de sol afin de secourir l'utilisateur. Toutefois, en état d'arrêt de sécurité, toutes les fonctions de la machine 10 sont coupées, empêchant la commande de cette machine 10.

Ainsi, la machine de travaux 10 comporte des moyens 32 de neutralisation de l'état d'arrêt de sécurité, propres à passer la machine depuis ledit état d'arrêt de sécurité jusqu'à un état de fonctionnement forcé. Les moyens de neutralisation 32 permettent donc d'outrepasser l'état d'arrêt de sécurité.

Ces moyens de neutralisation 32 comportent un dispositif informatique 34, comprenant notamment un panneau d'interface 36, représenté plus en détail sur la figure 2. Ce panneau d'interface 36 comporte un écran d'affichage 38 et une interface homme-machine 40 connectée à cet écran d'affichage 38.

Il est à noter que le second interrupteur d'arrêt d'urgence 31 est par exemple également agencé sur ce panneau d'interface 36.

La machine 10 comporte des moyens de commande auxiliaires 44, par exemple accessibles depuis le panneau d'interface 36. Ces moyens de commande auxiliaires 44 comportent divers actionneurs commandant les mouvements de la machine 10. Par exemple, les moyens de commande auxiliaires 44 comportent un premier actionneur 44A commandant la rotation de la tourelle 18 autour de l'axe vertical, un second actionneur 44B commandant le déploiement de la première partie de bras 22 dans la direction de l'axe vertical, et un troisième actionneur 44C commandant l'inclinaison de la seconde partie de bras 24 par rapport à la première partie de bras 22. Des indications relatives aux différents mouvements pouvant être commandés par ces actionneurs 44A, 44B, 44C peuvent affichées sur le panneau 36 afin de faciliter son utilisation.

En état de fonctionnement normal, ce sont les moyens de commande principaux 28 qui sont utilisés pour la commande de la machine 10. On notera que les moyens de commande auxiliaires 44 ne comportent généralement pas d'actionneur commandant les moyens de déplacement 14, car leur rôle est uniquement le pilotage de la plateforme 26 pour des opérations de maintenance de la machine 10 ou en vue d'apporter secours à un utilisateur dans cette plateforme 26.

Le panneau d'interface 36 comporte un élément de sélection 43, généralement actionnable par une clé, susceptible de prendre trois positions, à savoir :
- une position neutre, dans laquelle la clé peut être insérée ou retirée, et dans laquelle ni les moyens de commande principaux 28, ni les moyens de commande auxiliaires 44 ne peuvent être actionnés,
- une position haute, dans laquelle les moyens de commande principaux 28 peuvent être actionnés, et les moyens de commande auxiliaires 44 ne peuvent pas être activés, et
- une position basse, dans laquelle les moyens de commande auxiliaires 44 peuvent être actionnés, et les moyens de commande principaux 28 ne peuvent pas être activés

Les positions haute et basse ne sont accessibles que si la clé est introduite dans l'élément de sélection 43.

Cet élément de sélection 43 permet de déterminer si ce sont les moyens de commande principaux 28 ou les moyens de commande auxiliaires 44 exclusivement qui permettent la commande de la machine 10.

Le dispositif informatique 34 comporte par ailleurs un élément d'activation 45 permettant, lorsqu'il est actionné et maintenu, de déverrouiller les moyens de commande auxiliaires 44. Cet élément d'activation 45 est par exemple un bouton d'activation 45 agencé sur le panneau d'interface 36. Ainsi, l'utilisation des moyens de commande auxiliaires 44 n'est possible que lorsque le bouton d'activation 45 est maintenu, ce qui permet notamment d'empêcher des activations accidentelles des moyens de commande auxiliaires 44.

Toutefois, il est à noter que l'élément d'activation 45 est sans effet lorsque la machine est en état d'arrêt de sécurité suite au déclenchement d'un dispositif de sécurité 30. Ainsi, en cas d'arrêt de sécurité, il est nécessaire de passer dans l'état de fonctionnement forcé pour permettre l'actionnement de l'élément d'activation 45, donc pour permettre l'utilisation des moyens de commande auxiliaires 44.

Le dispositif informatique 34 comporte un second élément d'activation 42 permettant, lorsqu'il est actionné, le passage de la machine 10 depuis l'état d'arrêt de sécurité jusqu'à l'état de fonctionnement forcé. Cet élément d'activation 42 est par exemple un bouton d'activation 42 agencé sur le panneau d'interface 36.

Le panneau d'interface 36 comporte avantageusement d'autres éléments actionnables, par exemple un bouton de confirmation 46, un bouton d'annulation 48 et des boutons de sélection 47 et 49, par exemple des boutons de sélection « haut » et « bas ».

Les moyens de neutralisation 32 comportent par ailleurs un dispositif de mémoire 50, et des moyens 52 d'inscription, dans ce dispositif de mémoire 50, d'une information selon laquelle l'élément d'activation 42 a été actionné.

Avantageusement, les moyens d'inscription 52 sont configurés pour inscrire ladite information dans le dispositif de mémoire 50 uniquement lorsque l'élément d'activation 42 et les moyens de commande auxiliaires 44 ont tous deux été actionnés. On assure ainsi un suivi précis des moyens de neutralisation 32, indiquant uniquement lorsque les moyens de neutralisation 32 ont été effectivement utilisés pour le déplacement de la plateforme 26.

Avantageusement, le dispositif informatique 34 comporte des moyens d'affichage d'une indication selon laquelle l'élément d'activation 42 a été actionné, ou dans la variante préférée, selon laquelle à la fois l'élément d'activation 42 et les moyens de commande auxiliaires 44 ont été actionnés. Ces moyens d'affichage sont par exemple formés par l'écran d'affichage 38.

L'information inscrite dans le dispositif de mémoire 50, et l'indication affichée par les moyens d'affichage 38, peuvent être binaires, auquel cas elles indiquent uniquement si les moyens de neutralisation 32 ont été utilisés ou non.

En variante, cette information et cette indication sont développées, et indiquent par exemple la date et/ou l'heure à laquelle les moyens d'outre passement 32 ont été utilisés, et/ou si l'état d'arrêt de sécurité a été causé par le limiteur de charge, le dispositif de sécurité d'utilisateur, le premier ou le second interrupteur d'arrêt d'urgence, et/ou quels sont les mouvements qui ont été effectués par les moyens de commande auxiliaires 44.

Il est à noter que l'actionnement du premier ou du second interrupteur d'arrêt d'urgence a pour effet de mettre la machine 10 hors tension. Ainsi, avantageusement, les moyens de neutralisation 32 sont alimentés depuis une source d'alimentation via une connexion propre à être maintenue active même si l'un des premier et second interrupteurs d'arrêt d'urgence est actionné. Ainsi, les moyens de neutralisation 32 peuvent être utilisés pour remettre la machine 10 sous tension sans nécessiter une réinitialisation des interrupteurs d'arrêt d'urgence de cette machine de travaux 10.

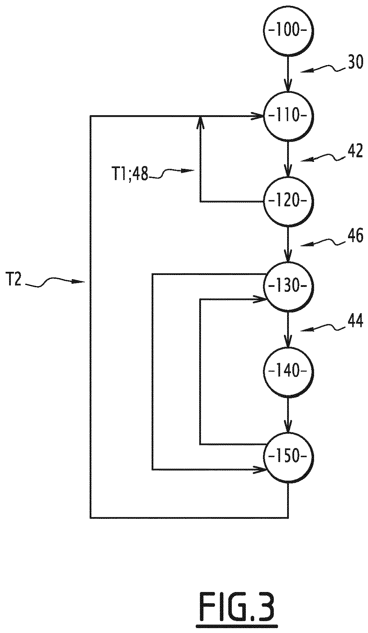

Un procédé d'outre passement d'un état d'arrêt de sécurité de la machine de travaux 10 va maintenant être décrit, notamment en référence à la figure 3.

Le procédé comporte une étape initiale 100, correspondant à l'état de fonctionnement normal de la machine de travaux 10.

Lorsque les dispositifs de sécurité 30 sont activés, que cela soit par le limiteur de charge, le dispositif de sécurité d'utilisateur, le premier ou le second 31 interrupteur d'arrêt d'urgence, on passe à une étape 110 dans laquelle la machine de travaux 10 se trouve dans l'état d'arrêt de sécurité.

Afin de secourir un utilisateur présent dans la plateforme 26, l'élément d'activation 42 est actionné pour activer les moyens de neutralisation 32.

On passe alors à une étape 120 d'attente de confirmation de l'activation des moyens de neutralisation 32. Au cours de cette étape 120, l'écran d'affichage 38 indique que l'état de fonctionnement forcé est sur le point d'être activé, et demande une confirmation ou une annulation. Cette confirmation ou annulation est effectuée en actionnant le bouton de confirmation 46 ou le bouton d'annulation 48.

En cas d'actionnement du bouton d'annulation 48, ou au terme d'une temporisation T1, d'une durée de 7 secondes, le dispositif informatique 34 considère que la commande de neutralisation de l'arrêt de sécurité est annulée, et le procédé revient à l'étape 110, en attente d'une réinitialisation de la machine 10.

En revanche, si le bouton de confirmation 46 est actionné, le procédé passe à une étape 130 dans laquelle la machine de travaux 10 est en état de fonctionnement forcé. L'écran d'affichage 38 indique alors que la machine 10 se trouve dans cet état de fonctionnement forcé. Par ailleurs, l'élément d'activation 45 et les moyens de commande auxiliaires 44 sont rendus utilisables.

En effet, dans cet état de fonctionnement forcé, les mouvements de la machine 10 sont autorisés, par l'élément d'activation 45 et les moyens de commande auxiliaires 44, malgré l'état d'arrêt de sécurité qui a été activé, notamment pour ramener la plateforme 26 a portée de sol. Dans cet état de fonctionnement forcé, la vitesse des mouvements est de préférence réduite.

Dans le cas où l'état d'arrêt de sécurité est dû au limiteur de charge, un voyant selon lequel la charge maximale a été dépassée reste actif.

En conséquence des mouvements commandés par les moyens de commande auxiliaires 44, le procédé passe à une étape 140, au cours de laquelle les moyens d'inscription 52 inscrivent une information dans la mémoire 50. Cette information comporte par exemple la date et/ou l'heure à laquelle les moyens d'outre passement 32 ont été utilisés, et/ou si l'état d'arrêt de sécurité a été causé par le limiteur de charge, le dispositif de sécurité d'utilisateur, le premier ou le second interrupteur d'arrêt d'urgence, et/ou quels sont les mouvements qui ont été effectués par les moyens de commande auxiliaires 44.

Suite à cette étape 140, les moyens d'affichage 38 peuvent également afficher une indication selon laquelle l'état de fonctionnement forcé a été activé. Cette indication peut également en variante également comporter la date et/ou l'heure à laquelle les moyens d'outre passement 32 ont été utilisés, et/ou si l'état d'arrêt de sécurité a été causé par le limiteur de charge, le dispositif de sécurité d'utilisateur, le premier ou le second interrupteur d'arrêt d'urgence, et/ou quels sont les mouvements qui ont été effectués par les moyens de commande auxiliaires 44.

Suite à l'actionnement des moyens de commande auxiliaires 44, le procédé passe à une étape 150 d'attente, pendant une temporisation T2, par exemple d'une durée de 7 secondes, au cours de laquelle il possible d'actionner à nouveau les moyens de commande auxiliaires 44. Dans ce cas, le procédé retourne à l'étape 130 puis, lorsque les moyens de commande auxiliaires 44 ne sont plus actionnés, revient à l'étape 150 pour une nouvelle temporisation T2.

Au terme de cette temporisation T2, le procédé revient à l'étape 110, dans laquelle la machine est en état d'arrêt de sécurité. La machine 10 devra ensuite être réinitialisée de manière classique.

Par ailleurs, les moyens de neutralisation 32 doivent également être réinitialisés, par un opérateur qualifié. Tant que cette réinitialisation n'a pas été effectuée, ladite indication est susceptible de rester affichée sur l'écran d'affichage 38, ou d'être affichée provisoirement, notamment à la mise sous tension de la machine 10. Avantageusement, la réinitialisation est réalisée en entrant un code spécifique de réinitialisation par l'intermédiaire des moyens d'affichage 38, du bouton de confirmation 46, du bouton d'annulation 48 et des boutons de sélection 47 et 49.

On notera que l'invention n'est pas limitée au mode de réalisation précédemment décrit, et pourrait présenter diverses variantes.

En particulier, l'invention pourrait être applicable à tout type de machine de travaux susceptible de passer dans un état d'arrêt de sécurité.

## Revendications

1. Machine de travaux (10) à nacelle élévatrice, comportant :
- des dispositifs de sécurité (30), propres à passer la machine (10) depuis un état de fonctionnement normal jusqu'à un état d'arrêt de sécurité,
- une plateforme (26) équipée de moyens de commande principaux (28), propres à commander la machine (10) en état de fonctionnement normal,
- des moyens (32) de neutralisation de l'état d'arrêt de sécurité, comprenant un élément d'activation (42), propre à passer la machine (10) depuis l'état d'arrêt de sécurité jusqu'à un état de fonctionnement forcé lorsqu'il est actionné, et
- des moyens (44) de commande auxiliaires de la machine (10), manipulables depuis le sol, propres à commander la machine (10) en état de fonctionnement forcé lorsqu'ils sont actionnés,
**caractérisée en ce que** les moyens de neutralisation (32) comportent un dispositif informatique (34) comprenant :
- l'élément d'activation (42),
- un dispositif de mémoire (50), et
- des moyens (52) d'inscription, dans le dispositif de mémoire (50), d'une information selon laquelle l'élément d'activation (42) a été actionné.

2. Machine de travaux (10) selon la revendication 1, dans lequel les moyens d'inscription (52) sont configurés pour inscrire l'information dans le dispositif de mémoire (50) uniquement lorsque l'élément d'activation (42) et les moyens de commande auxiliaires (44) ont tous deux été actionnés.

3. Machine de travaux (10) selon la revendication 1 ou 2 dans laquelle le dispositif informatique (34) comporte un écran d'affichage (38) et une interface homme/machine (40).

4. Machine de travaux (10) selon l'une quelconque des revendications précédentes, dans laquelle le dispositif informatique (34) comporte des moyens (38) d'affichage d'une indication selon laquelle l'élément d'activation (42) et/ou les moyens de commande auxiliaires (44) ont été actionnés.

5. Machine de travaux (10) selon l'une quelconque des revendications précédentes, dans laquelle les moyens de neutralisation (32) sont alimentés depuis une source d'alimentation via une connexion propre à être maintenue même en état d'arrêt de sécurité de la machine (10), et notamment lorsque l'état d'arrêt de sécurité est causé par un interrupteur (31) d'arrêt d'urgence.

6. Machine de travaux (10) selon l'une quelconque des revendications précédentes, dans laquelle les dispositifs de sécurité (30) comportent :
- un limiteur de charge, propre à passer la machine (10) depuis l'état de fonctionnement normal jusqu'à l'état d'arrêt de sécurité lorsque la masse de la charge portée par la plateforme (26) est supérieure à une valeur prédéterminée, et/ou
- un dispositif de sécurité d'utilisateur, propre à passer la machine (10) depuis l'état de fonctionnement normal jusqu'à l'état d'arrêt de sécurité lorsque une perte de conscience de l'utilisateur est détectée, et/ou
- au moins un interrupteur (31) d'arrêt d'urgence, propre à passer la machine (10) depuis l'état de fonctionnement normal jusqu'à l'état d'arrêt de sécurité lorsqu'il est actionné.

7. Machine de travaux (10) selon la revendication 6, dans laquelle l'information inscrite dans le dispositif de mémoire (50) indique :
- si l'état d'arrêt de sécurité a été causé par le limiteur de charge, le dispositif de sécurité d'utilisateur ou l'interrupteur (31), et/ou
- à quelle date et/ou heure l'élément d'activation (42) et/ou les moyens de commande auxiliaires (44) ont été actionnés, et/ou
- quels mouvements ont été effectués par les moyens de commande auxiliaires (44).

8. Procédé de neutralisation d'un état d'arrêt de sécurité d'une machine de travaux (10) selon l'une quelconque des revendications précédentes, **caractérisé en ce qu'**il comporte :
- une étape d'actionnement de l'élément d'activation (42), et
- une étape d'inscription, dans le dispositif de mémoire (50), d'une information selon laquelle l'élément d'activation (42) a été actionné.

9. Procédé de neutralisation selon la revendication 8, comportant, suite à l'étape d'actionnement de l'élément d'activation (42), une étape d'activation des moyens de commande auxiliaires (44), et dans lequel l'étape d'inscription fait suite à l'étape d'activation des moyens de commande auxiliaires (44), l'information étant inscrite lorsque l'élément d'activation (42) et les moyens de commande auxiliaires (44) ont tous deux été actionnés.

10. Procédé de neutralisation selon l'une quelconque des revendications 8 et 9, comportant, ultérieurement à l'étape d'inscription, une étape de réinitialisation des moyens de neutralisation (32), notamment au moyen d'un écran d'affichage (38) et d'une interface homme/machine (40) comportant des boutons (46, 47, 48, 49) permettant d'entrer un code de réinitialisation.

## Patentansprüche

1. Arbeitsmaschine (10) mit Hebebühne, aufweisend:
- Sicherheitsvorrichtungen (30), die imstande sind, die Maschine (10) ausgehend von einem Normal-Arbeitszustand in einen Sicherheits-Stoppzustand übergehen zu lassen,
- eine Plattform (26), die mit Hauptsteuermitteln (28) ausgestattet ist, die imstande sind, die Maschine (10) im Normal-Arbeitszustand zu steuern,
- Mittel (32) zur Aufhebung des Sicherheits-Stoppzustands, aufweisend ein Aktivierungselement (42), das imstande ist, die Maschine (10) von dem Sicherheits-Stoppzustand ausgehend in einen Zwangs-Arbeitszustand übergehen zu lassen, wenn es betätigt wird, und
- Hilfssteuermittel (44) zum Steuern der Maschine (10), die vom Boden aus bedienbar sind und die imstande sind, die Maschine (10) im Zwangs-Arbeitszustand zu steuern, wenn sie betätigt werden,
**dadurch gekennzeichnet, dass** die Aufhebungs-Mittel (32) aufweisen eine Rechner-Vorrichtung (34), die aufweist:
- das Aktivierungselement (42),
- eine Speichervorrichtung (50) und
- Mittel (52) zum Einschreiben, in die Speichervorrichtung (50), einer Information, gemäß welcher das Aktivierungselement (42) betätigt worden ist.

2. Arbeitsmaschine (10) gemäß Anspruch 1, wobei die Einschreibe-Mittel (52) konfiguriert sind zum Einschreiben der Information in die Speichervorrichtung (50) nur wenn das Aktivierungselement (42) und die Hilfssteuermittel (44) alle beide betätigt worden sind.

3. Arbeitsmaschine (10) gemäß Anspruch 1 oder 2, wobei die Rechner-Vorrichtung (34) einen Anzeigebildschirm (38) und eine Mensch/Maschine-Schnittstelle (40) aufweist.

4. Arbeitsmaschine (10) gemäß irgendeinem der vorhergehenden Ansprüche, wobei die Rechner-Vorrichtung (34) aufweist Mittel (38) zum Anzeigen einer Anzeige, gemäß welcher das Aktivierungselement (42) und/oder die Hilfssteuermittel (44) betätigt worden sind.

5. Arbeitsmaschine (10) gemäß irgendeinem der vorhergehenden Ansprüche, wobei die Aufhebungs-Mittel (32) von einer Versorgungsquelle aus versorgt werden über eine Verbindung, die imstande ist, aufrechterhalten zu werden sogar im Sicherheits-Stoppzustand der Maschine (10) und insbesondere wenn der Sicherheits-Stoppzustand verursacht wird durch einen Zwangsstopp-Unterbrecher (31).

6. Arbeitsmaschine (10) gemäß irgendeinem der vorhergehenden Ansprüche, wobei die Sicherheitsvorrichtung (30) aufweist:
- einen Beladungs-Begrenzer, der imstande ist, die Maschine (10) von dem Normal-Arbeitszustand in den Sicherheits-Stoppzustand übergehen zu lassen, wenn die Beladungsmasse, die von der Plattform (26) getragen wird, größer ist als ein vorbestimmter Wert, und/oder
- eine Benutzersicherheitsvorrichtung , die imstande ist, die Maschine (10) von dem Normal-Arbeitszustand in den Sicherheits-Stoppzustand übergehen zu lassen, wenn eine Bewusstseinsverlust des Benutzers erfasst wird, und/oder
- wenigstens einen Zwangsstopp-Unterbrecher (31), der imstande ist, die Maschine (10) ausgehend von dem Normal-Arbeitszustand in den Sicherheits-Stoppzustand übergehen zu lassen, wenn er betätigt wird.

7. Arbeitsmaschine (10) gemäß Anspruch 6, wobei die Information, die in der Speichervorrichtung (50) eingeschrieben wird, anzeigt:
- ob der Sicherheits-Stoppzustand verursacht worden ist von dem Beladungs-Begrenzer, der Benutzersicherheitsvorrichtung oder dem Unterbrecher (31), und/oder
- an welchem Datum und/oder zu welcher Zeit das Aktivierungselement (42) und/oder die Hilfssteuermittel (44) betätigt worden sind, und/oder
- welche Bewegungen durchgeführt worden sind durch die Hilfssteuermittel (44).

8. Verfahren zur Aufhebung eines Sicherheits-Stoppzustands einer Arbeitsmaschine (10) gemäß irgendeinem der vorhergehenden Ansprüche, **dadurch gekennzeichnet, dass** es aufweist:
- einen Schritt des Betätigens des Aktivierungselements (42) und
- einen Schritt des Einschreibens, in die Speichervorrichtung (50), einer Information, gemäß welcher das Aktivierungselement (42) betätigt worden ist.

9. Verfahren zur Aufhebung gemäß Anspruch 8, aufweisend, folgend auf den Schritt des Betätigens des Aktivierungselements (42), einen Schritt des Aktivierens der Hilfssteuermittel (44), und wobei der Schritt des Einschreibens auf den Schritt des Aktivierens der Hilfssteuermittel (44) folgt, wobei die Information, eingeschrieben wird, wenn das Aktivierungselement (42) und die Hilfssteuermittel (44) alle beide betätigt worden sind.

10. Verfahren zur Aufhebung gemäß irgendeinem der Ansprüche 8 und 9, aufweisend, nach dem Einschreibe-Schritt, einen Schritts des Rücksetzens der Aufhebungs-Mittel (32), insbesondere mittels eines Anzeigrebildschirms (38) und einer Mensch/Maschine-Schnittstelle (40), die Knöpfe (46, 47, 48, 49) hat, die das Eingeben eines Rücksetz-Codes erlauben.

## Claims

1. A works machine (10) with an aerial lift, including:
- safety devices (30), able to switch the machine (10) from a normal operating state to a safety shutdown state,
- a platform (26) equipped with primary control means (28), able to control the machine (10) in the normal operating state,
- means (32) for neutralizing the safety shutdown state, comprising an activation element (42), able to switch the machine (10) from the safety shutdown state to a forced operation state when it is actuated, and
- auxiliary control means (44) of the machine (10), able to be manipulated from the ground, capable of controlling the machine (10) in the forced operating state when they are actuated,
**characterized in that** the neutralizing means (32) include a computer device (34) comprising:
- the activation element (42),
- a memory device (50), and
- means (52) for recording, in the memory device (50), information according to which the activation element (42) has been actuated.

2. The works machine (10) according to claim 1, wherein the recording means (52) are configured to record the information in the memory device (50) only when the activation element (42) and the auxiliary control means (44) have both been actuated.

3. The works machine (10) according to claim 1 or 2, wherein the computer device (34) includes a display screen (38) and a man/machine interface (40).

4. The works machine (10) according to any one of the preceding claims, wherein the computer device (34) includes means (38) for displaying information according to which the activation element (42) and/or the auxiliary control means (44) have been actuated.

5. The works machine (10) according to any one of the preceding claims, wherein the neutralizing means (32) are powered by a power source via a connection able to be maintained even in case of safety shutdown of the machine (10), and in particular when the safety shutdown state is caused by an emergency shutdown switch (31).

6. The works machine (10) according to any one of the preceding claims, wherein the safety devices (30) include:
- a load limiter, able to switch the machine (10) from the normal operating state to the safety shutdown state when the mass of the load supported by the platform (26) exceeds a predetermined value, and/or
- a user safety device, able to switch the machine (10) from the normal operating state to the safety shutdown state when a loss of consciousness of the user is detected, and/or
- at least one emergency stop switch (31), able to switch the machine (10) from the normal operating state to the safety shutdown state when it is actuated.

7. The works machine (10) according to claim 6, wherein the information recorded in the memory device (50) indicates:
- whether the safety shutdown state was caused by the load limiter, the user safety device or the switch (31), and/or
- on what date and/or at what time the activation element (42) and/or the auxiliary control means (44) were actuated, and/or
- what movements were made by the auxiliary control means (44).

8. A method for neutralizing a safety shutdown state of a works machine (10) according to any one of the preceding claims, **characterized in that** it includes:
- a step for actuating the activation element (42), and
- a step for recording, in the memory device (50), information according to which the activation element (42) has been actuated.

9. The neutralizing method according to claim 8, including, after the step for actuating the activation element (42), a step for activating auxiliary control means (44), and wherein the recording step follows the activation step of the auxiliary control means (44), the information being recorded when the activation element (42) and the auxiliary control means (44) have both been actuated.

10. The neutralizing method according to any one of claims 8 and 9, including, after the recording step, a step for resetting the neutralizing means (32), in particular using a display screen (38) and a man/machine interface (40) including buttons (46, 47, 48, 49) making it possible to enter a reset code.
